# EUROPEAN PATENT SPECIFICATION

(11) **EP 4 704 551 B1**
(45) Date of publication and mention of the grant of the patent: **04.11.2026**
(21) Application number: 24723180.6
(22) Date of filing: 03.05.2024
(51) Int. Cl.: A01G 18/70

(54) **METHOD AND DEVICE FOR HARVESTING MUSHROOMS FROM A GROWING BED**
VERFAHREN UND VORRICHTUNG ZUM ERNTEN VON PILZEN AUS EINEM WACHSTUMSBEET
PROCÉDÉ ET DISPOSITIF POUR RÉCOLTER DES CHAMPIGNONS D'UN LIT DE CROISSANCE

(30) Priority: 05.05.2023 NL 2034767
(43) Date of publication of application: 11.03.2026
(73) Proprietor: Lemmen, Jacobus Alexander Jozef, 5928 LW Venlo (NL)
(72) Inventor: Lemmen, Jacobus Alexander Jozef, 5928 LW Venlo (NL)
(74) Representative: IP Maison
(86) International application number: PCT/EP2024/062359
(87) International publication number: WO 2024/231316

(56) References cited:
- EP-A1- 1 479 281
- EP-B1- 1 996 007
- CA-A1- 3 073 861
- JP-A- 2023 056 958
- NL-C2- 1 001 735
- US-A- 5 035 109

## Description

The present invention relates to a method and device for harvesting mushrooms from a growing bed. More particularly, the invention relates to such a method and device, where the harvesting is carried out mechanically. Examples of such a method and device may be found in NL1001735C, JP202356958A and US5035109.

Harvesting mushrooms is a labour-intensive step in mushroom production, especially when carried out manually. Such manual harvesting has the main advantage that mushrooms can be selectively picked from a growing bed, with the choice then being between mushrooms that can be picked because of their degree of maturity, or mushrooms that need to be picked because they will otherwise hinder the growth of other mushrooms. A second advantage is that the further handling of the harvested mushrooms can be better controlled, which is especially important for mushrooms that will eventually have to be sold in trays. A third advantage of manual harvesting is that there is little or no chance of spreading diseases that may occur on a mushroom bed. This disadvantage occurs particularly when automated cutting or slicing is used, where a cloth is used to catch mushrooms and remove them from the bed. Such a cloth is dragged across the bed when removing the cut mushrooms from the bed, where diseases can be spread. All the reason why ways are being sought to automate this step in such a way that the benefits of manual harvesting are achieved.

It is therefore an object of the present invention to provide a method and device for harvesting mushrooms from a growing bed that at least partially eliminates the aforementioned drawbacks. To this end, the invention provides a method for harvesting mushrooms from a growing bed, comprising applying an insulating layer to the growing bed (on top of the growing bed), in particular for insulating fungi and pathogens, applying a carrier layer to the insulating layer (on top of the insulating layer), such as a cloth for receiving harvested mushrooms, harvesting the mushrooms using a cutting or sawing device and transferring the mushrooms to the carrier layer, removing the mushrooms together with the carrier layer from the insulation layer while the insulation layer remains on the growing bed and optionally removing the insulation layer. This last step will be necessary before the next flush of mushrooms can be grown on the bed.

The insulation layer ensures that the carrier layer does not come into direct contact with the growing bed. This is especially important when removing the carrier layer, which can now be done by moving it over the insulation layer away from the growing bed, leaving the mushrooms on the carrier layer and leaving the insulation layer on the growing bed. The carrier layer can be removed by rolling it up and gradually dragging it across the cultivation bed. The mushrooms can thereby be removed from the carrier layer while it is still on the growing bed, or transferred at the level of a roll-up device, such as a spool or mandrel.

Preferably, the insulation layer and carrier layer are applied simultaneously. This can be done by applying them to the growing bed from two different dispensing devices, or - as this allows for the most efficient work - from one dispensing device. By further preference, this is done while cutting and/or sawing the mushrooms. In this way, the growing bed is filled as fast as possible and a single device can be used to cut and dispense the mushrooms.

The growing bed and the cutting or sawing device and a dispensing device for the carrier layer and/or insulation layer may be moved between them to harvest the mushrooms and apply the carrier layer and/or insulation layer, where the bed may be moved and the cutting or sawing device and dispensing devices may be stationary, but preferably the cutting or sawing device and a dispensing device for the carrier layer and/or insulation layer are moved along the bed.

The growing bed can thereby extend in a longitudinal and transverse direction, wherein the insulation layer and/or carrier layer can be supplied from a side in the transverse direction, and discharged to a side (or end) in the longitudinal direction. Additionally and/or alternatively, the insulation layer and/or carrier layer can be both supplied from an end in the longitudinal direction, and discharged to the same or an opposite end in the longitudinal direction.

The invention further relates to a device for harvesting mushrooms from a cultivation bed, in particular a cultivation bed provided with compost and possibly casing soil, forming on an upper surface a harvest surface on which mushrooms can be cultivated and subsequently harvested, which harvest surface extends in a longitudinal direction and a transverse direction, the device comprising a knife or assembly of knives having an effective cutting surface or effective cutting line extending across the width of the harvest surface in at least one directional component in the transverse direction, wherein the growing bed and the knife or assembly of knives are mutually movable with at least one directional component in the longitudinal direction of the harvest surface such that the effective cutting plane or effective cutting line can completely cover the harvest surface, and a first dispensing device for applying to the harvest surface an insulating layer for insulating fungi and pathogens, such as a film and a second dispensing device, for applying to the insulation layer a support for harvested mushrooms, such as a cloth or net.

The first and/or second dispensing device may be coupled to the effective cutting plane or effective cutting line of the knife and, together with the knife or assembly of knives, movable with respect to the bed for applying the insulation layer and/or carrier layer at a fixed distance from the effective cutting plane or effective cutting line of the knife and thereby on a harvested part of the harvest surface.

The knife or assembly of knifes according to the invention may comprise, for example, an assembly of rotating knifes as described in Dutch patent application NL2032382 or a single saw making a reciprocating cutting movement. Preferably the cutting or sawing device is formed by a bandsaw, belt saw or gang saw. Such bandsaw, belt saw or gang saw may by further preference extend in the transverse direction over a width that is over dimensioned with respect to the width of the growing bed in said transverse direction, in order to ensure that all mushrooms on the bed can be harvested. The saw band or belt is looped around at least two or more wheels or pulleys for that purpose, which wheels are then necessarily mutually spaced at a distance larger than the width of the beds and the shelving. In order to be able to move the cutting or sawing device relative to the beds, it should be movable in the traverse direction in case the shelving is provided with uprights at its sides in the width direction.

To facilitate the movement of the cutting or sawing device, the shelving may be arranged such that it has no uprights at both sides of the shelving, positioned exaction opposite to each other, but always a bit apart in the length direction. For instance, such uprights may be positioned alternatingly at one side or another of the growing beds, in a zig-zag manner.

An effective cutting plane or line means the plane or line on which the cutting of the mushrooms takes place. Where use is made of an assembly of knives, for example a number of rotating knives, preferably arranged partially overlapping each other, such an effective cutting line is a shape composed of outlines of the different knives. Such a line need not comply with the purely mathematical definition but can have curvatures, or, on the contrary, be a tangent to points on the various knives.

The first and/or second dispensing device may thereby include a dispensing point adjacent to the effective cutting edge or effective cutting line of the knife, for applying the insulation layer and/or carrier layer during use immediately after harvesting. The dispensing point is thereby the point (or line) at which the carrier layer or insulating layer is placed on the growing bed. This point moves relative to the bed during application, as the bed is moved relative to the dispensing device or the dispensing device is moved relative to the bed.

For example, the first and/or second dispensing device may comprise a roll on which the insulating layer and/or carrier layer is applied, wherein the roll is arranged adjacent to the harvest surface in the width direction and guided around a bending line extending with both a directional component in the longitudinal direction and in the transverse direction, and in particular diagonally across the harvest surface, for applying the insulating layer and/or carrier layer in a longitudinal direction of the growing bed during use.

The device may also include a discharge device, for discharging the carrier layer in a longitudinal direction from the growing bed, in particular with the harvested mushrooms. At some location above the carrier layer may thereby include a scanning device, for scanning harvested mushroom on the carrier layer for determining the weight or shape or quality of the harvested mushrooms, and a sorting device for sorting the mushrooms by weight or shape or quality and/or a packaging device for packaging the mushrooms. The discharging device may in a preferred embodiment be configured to dispend the carrier layer at a higher speed than the relative speed of the cutting device and the bed. This results in spreading the harvested mushrooms, which makes further processing thereof easier. In particular when a graphical recognition of the mushrooms forms part of the further processing step, physical separation of the harvested mushrooms is beneficial.

According to the invention, packaging takes place without intermediate storing step. For that goal, a picking device, such as a robot, may be configured for picking mushrooms from the carrier layer based on visual recognition information, and to directly transfer the mushrooms to a packaging. Picking mushrooms by a robot and delivering them to a packaging may be done while measuring the weight of the package while being filled by the robot.

The device according to the invention may further comprise a takeover plane extending between the cutting or sawing device and the carrier layer, thereby guiding the just-harvested mushrooms from the knife or assembly of knives to the carrier layer.

The invention further relates to a shelving comprising multiple beds arranged on either side of a central upright, and freely accessible from a side facing away from the upright, and in particular provided with multiple beds arranged one above the other, wherein at least one of the beds is provided with a knife or assembly of knives having an effective cutting edge or effective cutting line extending across the width of the harvest surface by at least a directional component in the width direction wherein the growing bed and the knife or assembly of knifes are mutually movable with at least one directional component extending longitudinally across the harvest surface such that the effective cutting plane or effective cutting line can completely cover the harvest surface, a first dispensing device for applying to the harvest surface an insulating layer for insulating fungi and pathogens, such as a film and a second releasing device, for applying to the insulation layer a support for harvested mushrooms, such as a cloth or net. Preferably, this involves sharing the knife or assembly of knives and the dispensing devices with several beds.

The invention will now be elucidated with reference to the following figures, wherein:
- Figure 1 shows a detail of the present invention, and;
- Figure 2 shows an overview of the present invention.

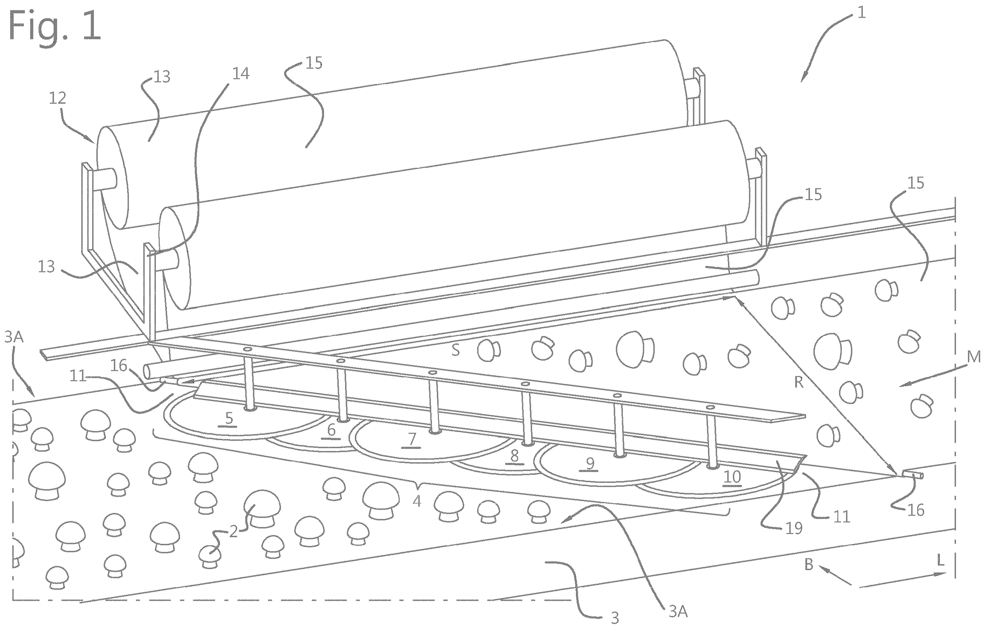

Figure 1 shows a device 1 for harvesting mushrooms 2 from a growing bed 3 provided with compost and casing soil, having at an upper end a harvest surface 3A on which mushrooms 2 are growable and subsequently harvestable, which harvest surface 3A extends in a longitudinal direction L and a transverse direction B. The device comprises an assembly 4 of knives 5-10 having an effective cutting line 11, extending across the width of the harvest surface with at least a directional component R in the width direction B, and in the example shown also with a directional component S in the longitudinal direction L. Consequently, the effective cutting line extends diagonally across the growing bed 3.

The assembly 4 of knifes is movable in the longitudinal direction L (in the representation shown during harvesting in a direction M, in negative direction of the arrow L), such that the effective cutting line 11 can completely cover the harvest surface of the growing bed 3. The invention further shows a first dispensing device 12 for applying to the harvest surface 3A an insulation layer 13 for insulating fungi and pathogens, in this case formed by a film; and a second dispensing device 14, for applying to the insulation layer 13 a carrier layer 15 for harvested mushrooms 2, in this case formed by a cloth.

The first and second dispensing devices 12, 14 are linked in position to the effective cutting line 11 of the knifes 5-10 and, together with the assembly of knifes 4 relative to the growing bed 3, are movable for applying the insulating layer 12, 14 and/or the carrier layer at a fixed distance from the effective cutting line 11 of the knife and thus on a harvested part of the harvest surface 3A.

The first and/or second dispensing device include a dispensing point formed by a shaft 16, which is adjacent to the effective cutting line 11 of the assembly of knifes 4, for applying the insulating layer 13 and/or the carrier layer 15 during operation immediately after harvesting. The first and second dispensing devices 12, 14 comprise a roller on which the insulating layer 13 and the carrier layer 15 are applied, the rollers being arranged in the width direction B adjacent to the harvest surface 3A and both guided around a bending line 16 that extends with both a directional component in the longitudinal direction L and in the transverse direction B, and therefore diagonally across the harvesting surface 3A, for applying the insulating layer 13 and the carrier layer 15 during use in a longitudinal direction L (actually M) of the growing bed 3. For smooth transfer of the mushrooms from the assembly of knifes 4 to the carrier layer 15, a takeover plane 19 is provided.

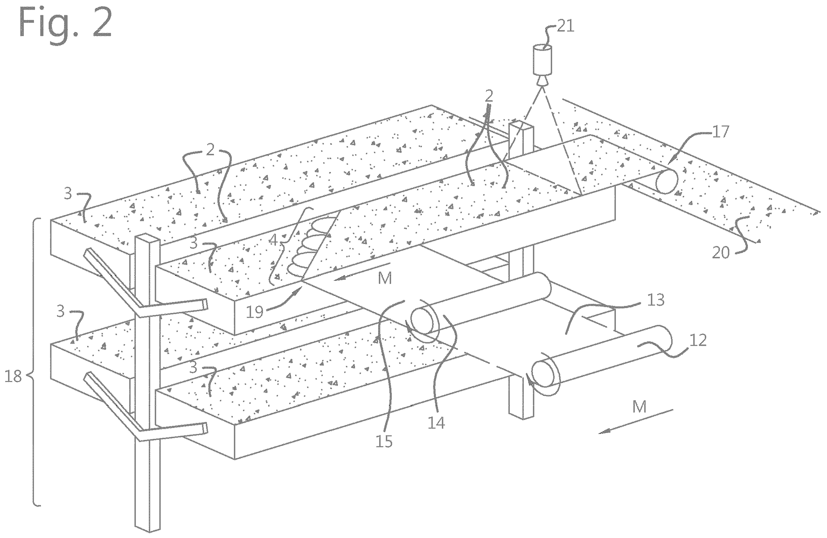

Figure 2 shows the device 1 from figure 1 applied to a rack 18 with several growing beds 3, positioned side by side and one above the other, on which there is also a discharge device 17, for discharging the carrier layer in a longitudinal direction from the growing bed. The harvested mushrooms 2 may thereby, for example, be discharged on a belt 20 for further processing. Alternatively, they may be removed from the carrier layer 15 before or during removal of the carrier layer 15 from the growing bed 3. For the latter purpose, a scanning device 21 may be present, for scanning harvested mushrooms 2 on the carrier layer 15 for (optically) determining the weight of the harvested mushrooms 2, and a sorting device for sorting the mushrooms by weight and/or a packaging device for packaging the mushrooms.

The examples shown are for explanation purposes only and do in no way limit the scope of protection as defined in the following claims.

## Claims

1. Method for harvesting mushrooms (2) from a growing bed (3), including:
- Applying an insulating layer (13), such as a film, to the growing bed (3), especially for insulating fungi and pathogens;
- Applying a carrier layer (15), such as a cloth, to the insulation layer (13) to receive harvested mushrooms;
- Harvesting mushrooms (2) using a cutting or sawing device (4) and transferring them to the carrier layer (15);
- Removing the mushrooms (2) together with the carrier layer (15) from the insulating layer (13) while the insulating layer (13) remains on the growing bed (3);
- Removing the insulation layer (13).

2. Method according to claim 1, including simultaneous application of the insulation layer (13) anc the carrier layer (15).

3. Method according to claim 1 or 2, comprising applying the insulating layer (13) and/or carrier layer (15) while cutting and/or sawing the mushrooms (2).

4. Method according to claim 1, 2 or 3, comprising mutually moving the growing bed (3) anc
the cutting or sawing device (4) and a dispensing device (12,14) for the carrier layer and/or
insulation layer and preferably moving the growing bed (3) and the cutting or sawing device (4)
and a dispensing device for the carrier layer and/or insulation layer.

5. Method according to any of the preceding claims, wherein the growing bed (3) extends in a
longitudinal and a transverse direction, comprising supplying the insulation layer (13) and/or
carrier layer (15) from a side in the transverse direction and discharging to a side in the longitudinal direction at least the carrier layer.

6. Device (1) for harvesting mushrooms (2) from a growing bed (3) in particular a cultivation bed
provided with compost and possibly casing soil, having at one upper end a harvest surface (3A) on
which mushrooms (2) can be cultivated and subsequently harvested, which harvest surface
extends in a longitudinal and a transverse direction, comprising:
- A knife or assembly of knifes (5,6,7,8,9,10) having an effective cutting edge or effective cutting line,
extending across the width of the harvest surface with at least one directional component (R) in
the broadside direction, wherein the growing bed (3) and the knife or assembly of knifes (5,6,7,8,9,10) are
mutually movable with at least one directional component in the longitudinal direction of the harvest surface, such that the effective cutting plane or line of cut can completely cover the harvest surface, **characterised by** the device further comprising:
- A first dispensing device (12) for applying to the harvest surface an insulating layer (13) for insulating fungi and germs, such as a film; and
- A second dispensing device (14), for applying to the insulation layer (13) a carrier layer (15) for harvested mushrooms, such as a cloth or net.

7. Device according to claim 6, wherein the first and/or second dispensing device is coupled to the effective cutting plane or effective cutting line of the knife and is movable together with the knife or assembly of knives relative to the growing bed (3) for applying the insulation layer (13) and/or carrier layer (15) at a fixed distance from the effective cutting plane or effective cutting line of the knife and thereby on a harvested part of the harvest surface.

8. Device according to claim 7, wherein the first and/or second dispensing device comprises a dispensing point adjacent to the effective cutting plane or effective cutting line of the knife, for applying the insulation layer (13) and/or carrier layer (15) during use immediately after harvesting.

9. Device according to claim 6, 7 or 8, wherein the first and/or second dispensing device comprises a roller on which the carrier layer (15) is applied, wherein the roller is arranged adjacent to the harvest surface in the width direction and guided around a bending line extending with both a directional component in the longitudinal direction and in the transverse direction, and in particular diagonally across the harvest surface, for applying the carrier layer (15) in a longitudinal direction of the growing bed (3) during use.

10. Device according to any of claims 6-9, comprising a discharge device (17), for the longitudinal discharge of the carrier layer (15) from the growing bed (3), in particular with the harvested mushrooms.

11. Device according to any of claims 6-10, provided with a scanning device (21), for scanning harvested mushroom on the carrier layer for determining the weight of the harvested mushrooms, and a sorting device for sorting the mushrooms by weight or shape or quality and/or a packaging device for packaging the mushrooms.

12. Device according to any of claims 6-11, wherein the knife comprises an assembly of rotating knifes (5,6,7,8,9,10) or a single saw.

13. Device according to any of claims 6-12, comprising a takeover plane extending between the cutting or sawing device and the carrier layer (15).

14. Shelving, comprising several growing beds (3), arranged on either side of a central upright, and freely accessible from a side facing away from the upright, comprising at least one device according to claims 6-13.

15. Shelving according to claim 14, comprising several growing beds (3), placed one above theother.

## Patentansprüche

1. Verfahren zum Ernten von Pilzen (2) aus einem Wachstumsbeet (3), umfassend:
- Aufbringen einer Isolierschicht (13), wie etwa eine Folie, auf das Wachstumsbeet (3), insbesondere zum Isolieren von Fungus und Krankheitserregern;
- Aufbringen einer Trägerschicht (15), wie etwa ein Gewebe, auf die Isolierschicht (13), um geerntete Pilze aufzunehmen;
- Ernten von Pilzen (2) unter Verwendung einer Schneid- oder Sägevorrichtung (4) und Überführen dieser auf die Trägerschicht (15);
- Entfernen der Pilze (2) zusammen mit der Trägerschicht (15) von der Isolierschicht (13), während die Isolierschicht (13) auf dem Wachstumsbeet (3) verbleibt;
- Entfernen der Isolierschicht (13).

2. Verfahren gemäß Anspruch 1, umfassend das gleichzeitige Aufbringen der Isolierschicht (13) und der Trägerschicht (15).

3. Verfahren gemäß Anspruch 1 oder 2, aufweisend das Aufbringen der Isolierschicht (13) und/oder der Trägerschicht (15), während die Pilze (2) abgeschnitten und/oder abgesägt werden.

4. Verfahren gemäß Anspruch 1, 2 oder 3, aufweisend ein Bewegen im Bezug von Wachstumsbeet (3) und der Schneid- oder Sägevorrichtung (4) und einer Abgabevorrichtung (12, 14) für die Trägerschicht und/oder die Isolierschicht zueinander und vorzugsweise ein Bewegen des Wachstumsbeets (3) und der Schneid- oder Sägevorrichtung (4) und einer Abgabevorrichtung für die Trägerschicht und/oder die Isolierschicht.

5. Verfahren gemäß einem der vorhergehenden Ansprüche, bei der sich das Wachstumsbeet (3) in einer Längs- und einer Querrichtung erstreckt, aufweisend ein Zuführen der Isolierschicht (13) und/oder der Trägerschicht (15) von einer Seite in Querrichtung her und ein Abführen zumindest der Trägerschicht zu einer Seite in der Längsrichtung.

6. Vorrichtung (1) zum Ernten von Pilzen (2) aus einem Wachstumsbeet (3), insbesondere einem Kulturbeet, das mit Kompost und möglicherweise Deckerde versorgt ist, wobei das Wachstumsbeet an einem oberen Ende eine Aberntoberfläche (3A) aufweist, auf welcher Pilze (2) kultiviert und nachfolgend geernted werden können, wobei sich die Aberntoberfläche in einer Längs- und einer Querrichtung erstreckt, aufweisend:
- Ein Messer oder eine Messerkonstruktion (5, 6, 7, 8, 9, 10) mit einer wirksamen Schneide oder einer wirksamen Schneidlinie,
die sich über die Breite der Aberntoberfäche erstreckt, mit zumindest einer Richtungskomponente (R) in der Breitseitenrichtung, wobei das Wachstumsbeet (3) und das Messer oder die Messerkonstruktion (5, 6, 7, 8, 9, 10) mit zumindest einer Richtungskomponente in der Längsrichtung der Aberntoberfläche zueinander beweglich sind, sodass die wirksame Schneidebene oder Schneidlinie die Aberntoberfläche vollständig überdecken kann**, dadurch gekennzeichnet, dass** die Vorrichtung weiter aufweist:
- Eine erste Abgabevorrichtung (12) zum Aufbringen, auf die Aberntoberfläche, einer Isolierschicht (13) zum Isolieren von Fungus und Keimen, wie etwa einer Folie; und
- Eine zweite Abgabevorrichtung (14), zum Aufbringen, auf die Isolierschicht (13), einer Trägerschicht (15) für geerntete Pilze, wie etwa ein Gewebe oder Netz.

7. Vorrichtung gemäß Anspruch 6, bei der die erste und/oder zweite Abgabevorrichtung mit der wirksamen Schneidebene oder der wirksamen Schneidlinie des Messers verknüpft ist und zusammen mit dem Messer oder der Messerkonstruktion bezüglich des Wachstumsbeets (3) bewegbar ist, um die Isolierschicht (13) und/oder die Trägerschicht (15) in einem festen Abstand zur wirksamen Schneidebene oder wirksamen Schneidebene des Messers und somit auf einem abgeernteten Teil der Aberntoberfläche aufzubringen.

8. Vorrichtung gemäß Anspruch 7, bei der die erste und/oder zweite Abgabevorrichtung einen Abgabepunkt aufweist, der zu der wirksamen Schneidebene oder der wirksamen Schneidlinie des Messers benachbart liegt, um die Isolierschicht (13) und/oder die Trägerschicht (15) im Betrieb unmittelbar nach dem Abernten aufzubringen.

9. Vorrichtung gemäß Anspruch 6, 7 oder 8, bei der die erste und/oder zweite Abgabevorrichtung eine Rolle aufweist, auf die die Trägerschicht (15) aufgebracht wird, wobei die Rolle in der Breitenrichtung benachbart zu der Aberntoberfläche angeordnet ist und um eine Biegelinie geführt ist, die sich sowohl mit einer Richtungskomponente in der Längsrichtung als auch in der Querrichtung erstreckt, und dies insbesondere diagonal über die Aberntoberfläche hinweg, um die Trägerschicht (15) im Betrieb in einer Längsrichtung des Wachstumsbeets (3) aufzubringen.

10. Vorrichtung gemäß einem der Ansprüche 6-9, aufweisend eine Abführvorrichtung (17) für die Längs-Abführung der Trägerschicht (15) von dem Wachstumsbeet (3), insbesondere mit den geernteten Pilzen.

11. Vorrichtung gemäß einem der Ansprüche 6-10, die mit einer Untersuchungsvorrichtung (21) versehen ist, zum Untersuchen von geerntetem Pilz auf der Trägerschicht zum Bestimmen des Gewichts der geernteten Pilze, und einer Sortiervorrichtung zum Sortieren der Pilze nach Gewicht oder Form oder Qualität und/oder einer Verpackungsvorrichtung zum Verpacken der Pilze.

12. Vorrichtung gemäß einem der Ansprüche 6-11, bei der das Messer eine Konstruktion mit sich drehenden Messern (5, 6, 7, 8, 9, 10) oder eine einzelne Säge aufweist.

13. Vorrichtung gemäß einem der Ansprüche 6-12, aufweisend eine Übernahmeebene, die sich zwischen der Schneid- oder Sägevorrichtung und der Trägerschicht (15) erstreckt.

14. Regaleinheit, aufweisend mehrere Wachstumsbeete (3), die zu beiden Seiten einer mittigen aufstehenden Einheit angeordnet sind und von einer von der aufstehenden Einheit weg weisenden Seite her frei zugänglich sind, aufweisend zumindest eine Vorrichtung gemäß einem der Ansprüche 6-13.

15. Regaleinheit gemäß Anspruch 14, aufweisend mehrere Wachstumsbeete (3), die übereinander platziert sind.

## Revendications

1. Procédé de récolte de champignons (2) à partir d'un lit de culture (3), comportant :
- l'application d'une couche d'isolation (13), telle qu'un film, sur le lit de culture (3), en particulier pour l'isolation de moisissures et de pathogènes ;
- l'application d'une couche de support (15), telle qu'une toile, sur la couche d'isolation (13) pour recevoir les champignons récoltés ;
- la récolte des champignons (2) à l'aide d'un dispositif de coupe ou de sciage (4) et transfert de ceux-ci vers la couche de support (15) ;
- le retrait des champignons (2) conjointement avec la couche de support (15) de la couche d'isolation (13) alors que la couche d'isolation (13) reste sur le lit de culture (3) ;
- le retrait de la couche d'isolation (13).

2. Procédé selon la revendication 1, comportant l'application simultanée de la couche d'isolation (13) et de la couche de support (15).

3. Procédé selon la revendication 1 ou 2, comprenant l'application de la couche d'isolation (13) et/ou de la couche de support (15) pendant la coupe et/ou le sciage des champignons (2).

4. Procédé selon la revendication 1, 2 ou 3, comprenant le déplacement mutuel du lit de culture (3) et du dispositif de coupe ou de sciage (4) et un dispositif de distribution (12, 14) pour la couche de support et/ou la couche d'isolation et de préférence le déplacement du lit de culture (3) et du dispositif de coupe ou de sciage (4) et un dispositif de distribution pour la couche de support et/ou la couche d'isolation.

5. Procédé selon l'une des revendications précédentes, dans lequel le lit de culture (3) s'étend dans une direction longitudinale et une direction transversale, comprenant l'alimentation de la couche d'isolation (13) et/ou de la couche de support (15) à partir d'un côté dans la direction transversale et l'évacuation vers un côté dans la direction longitudinale d'au moins la couche de support.

6. Dispositif (1) de récolte de champignons (2) à partir d'un lit de culture (3), en particulier un lit de culture fourni avec du compost et éventuellement avec du terreau, présentant au niveau d'une extrémité supérieure une surface de récolte (3A) sur laquelle des champignons (2) peuvent être cultivés et ensuite récoltés, laquelle surface de récolte s'étend dans une direction longitudinale et une direction transversale, comprenant :
- un couteau ou ensemble de couteaux (5, 6, 7, 8, 9, 10) présentant un bord de coupe effectif ou une ligne de coupe effective, s'étendant au travers la largeur de la surface de récolte avec au moins une composante directionnelle (R) dans la direction de flanc, dans lequel le lit de culture (3) et le couteau ou l'ensemble de couteaux (5, 6, 7, 8, 9, 10) sont mobiles l'un par rapport à l'autre avec au moins une composante directionnelle dans la direction longitudinale de la surface de récolte, de telle sorte que le plan de coupe effectif ou la ligne de coupe effective puisse recouvrir complètement la surface de récolte,
**caractérisé en ce que** le dispositif comprend en outre :
- un premier dispositif de distribution (12) pour l'application sur la surface de récolte d'une couche d'isolation (13) pour l'isolation de moisissures et de germes, tels qu'un film ; et
- un deuxième dispositif de distribution (14) pour l'application sur la couche d'isolation (13) d'une couche de support (15) pour les champignons récoltés, tels qu'une toile ou un filet.

7. Dispositif selon la revendication 6, dans lequel le premier et/ou le deuxième dispositif de distribution est couplé au plan de coupe effectif ou à la ligne de coupe effective du couteau et est mobile conjointement avec le couteau ou l'ensemble de couteaux par rapport au lit de culture (3) pour appliquer la couche d'isolation (13) et/ou la couche de support (15) à une distance fixe du plan de coupe effectif ou de la ligne de coupe effective du couteau et ainsi sur une partie récoltée de la surface de récolte.

8. Dispositif selon la revendication 7, dans lequel le premier et/ou le deuxième dispositif de distribution comprend un point de distribution adjacent au plan de coupe effectif ou à la ligne de coupe effective du couteau, pour appliquer la couche d'isolation (13) et/ou la couche de support (15) pendant l'utilisation immédiatement après la récolte.

9. Dispositif selon la revendication 6, 7 ou 8, dans lequel le premier et/ou le deuxième dispositif de distribution comprend un rouleau sur lequel la couche de support (15) est appliquée, dans lequel le rouleau est disposé adjacent à la surface de récolte dans la direction de la largeur et guidé autour d'une ligne de pliage s'étendant avec une composante directionnelle à la fois dans la direction longitudinale et dans la direction transversale, et en particulier diagonalement au travers la surface de récolte, pour appliquer la couche de support (15) dans une direction longitudinale du lit de culture (3) pendant l'utilisation.

10. Dispositif selon l'une des revendications 6-9, comprenant un dispositif d'évacuation (17), pour l'évacuation longitudinale de la couche de support (15) du lit de culture (3), en particulier avec les champignons récoltés.

11. Dispositif selon l'une des revendications 6-10, pourvu d'un dispositif de balayage (21), pour le balayage d'un champignon récolté sur la couche de support pour déterminer le poids des champignons récoltés, et un dispositif de tri pour trier les champignons par poids ou par forme ou par qualité et/ou un dispositif d'emballage pour emballer les champignons.

12. Dispositif selon l'une des revendications 6-11, dans lequel le couteau comprend un ensemble de couteaux rotatifs (5, 6, 7, 8, 9, 10) ou une scie unique.

13. Dispositif selon l'une des revendications 6-12, comprenant un plan de transfert s'étendant entre le dispositif de coupe ou de sciage et la couche de support (15),

14. Rayonnage, comprenant plusieurs lits de culture (3), disposés de chaque côté d'un montant central, et librement accessibles depuis un côté orienté à l'opposé du montant, comprenant au moins un dispositif selon les revendications 6-13.

15. Rayonnage selon la revendication 14, comprenant plusieurs lits de culture (3), placés les uns au-dessus des autres.
